# DEMANDE DE BREVET EUROPEEN

(11) **EP 0 599 710 A1**
(43) Date de publication de la demande: **01.06.1994**
(21) Numéro de dépôt: 93402817.6
(22) Date de dépôt: 19.11.1993
(51) Int. Cl.: G02C 11/02

(54) **Perfectionnements aux lunettes de vision ou de protection solaire**

(30) Priorité: 20.11.1992 FR 9213954
(71) Demandeur: ETS. LOUIS CABAUD & FILS LUNETTERIE, F-39360 Molinges (FR)
(72) Inventeur: Cabaud, Raoul, F-39360 Molinges (FR)
(74) Mandataire: Petit, Hélène

(57) **Abrégé**

Lunettes de vision ou de protection solaire, comportant une face frontale formée de deux parties (2, 3) généralement fermées sur elles-mêmes, entourant respectivement les verres des lunettes, ces parties étant réunies par une zone de liaison centrale chevauchant l'arête du nez de l'utilisateur, et deux branchesde support (4) des lunettes, articulées sur les cotés latéraux opposés de la face avant.

Selon l'invention ces lunettes se caractérisent en ce que la face avant est associée à une pluralité d'éléments décoratifs juxtaposés (5, 8) aptes à venir coiffer par l'extérieur les parties de la face entourant les verres et/ou la zone de liaison centrale, chaque élément étant réalisé indépendamment de la face et conformé de telle sorte que les deux parties et le cas échéant la zone centrale, soient partiellement ou totalement recouverts par lesdits éléments, présentant de l'un à l'autre un coloris et/ou un profil éventuellement distinct.

## Description

La présente invention se rapporte au domaine des lunettes de correction de la vision ou de protection des yeux vis-à-vis notamment du rayonnement solaire, comportant de façon en soi connue un support, généralement constitué d'une face ou partie frontale supportant deux verres disposés devant les yeux, cette face venant chevaucher dans sa partie centrale l'extrémité de l'arête nasale de l'utilisateur, et dans ses côtés deux branches parallèles, articulées sur les bords extérieurs de la face frontale, ces branches étant munies de moyens de support des lunettes sur le dessus des oreilles.

De telles lunettes sont connues dans la technique sous de multiples formes, les différences d'un mode de réalisation à l'autre concernant pour l'essentiel la présentation ou la matière qui constitue la face avant et les branches latérales, la structure de ces organes pouvant subir de très nombreuses variantes en ce qui concerne leur aspect ou leur profil, aussi bien que leurs coloris, leur mode d'assemblage, etc...

Toutefois, de la manière la plus habituelle, ces lunettes sont réalisées par moulage ou façonnage d'un matériau approprié qui comporte une couleur déterminée, caractéristique de la nature de ce matériau ou d'élements colorants susceptibles d'être mélangés à la matière avant moulage.

Dans certaines réalisations, on a également prévu d'enjoliver de telles lunettes, en venant rapporter sur la face avant un cache ou une monture appropriée, de couleur différente de celle qui constitue la partie frontale ou les branches latérales, habituellement amovible et qui est solidarisée de la face avant elle-même par un système d'accrochage, rapporté sur celle-ci et qui en assure l'immobilisation.

Toutefois, dans de telles réalisations, notamment du genre de celle envisagée dans le brevet français FR-A- 2 657 436, cette monture additionnelle d'un seul tenant est seulement fixée de façon temporaire sur la face avant des lunettes, en entourant partiellement ou totalement les parties de cette face qui supportent les verres, le cas échéant l'élément de liaison central qui réunit ces parties de part et d'autre de l'arête du nez. Il en résulte que cette garniture peut éventuellement se désolidariser de la face avant des lunettes. En outre, elle ne permet pas de créer des zones distinctes comportant de façon uniforme un coloris donné, aussi bien sur le devant de la face que sur ses côtés, le mode d'accrochage de cette monture sur la face n'étant en outre pas parfaitement satisfaisant et risquant en particulier de gêner le porteur des lunettes en creant des surépaisseurs locales désagréables.

La présente invention concerne une nouvelle structure pour lunettes de vision ou de protection, qui évite ces inconvénients.

A cet effet, les lunettes considérées, comportant une face frontale formée de deux parties généralement fermées sur elles-mêmes, entourant respectivement les verres des lunettes, ces parties étant réunies par une zone de liaison centrale chevauchant l'arête du nez de l'utilisateur, et deux branches de support des lunettes, articulées sur les côtés latéraux opposés de la face avant, la face avant étant associée à une pluralité d'éléments décoratifs juxtaposés, aptes à venir coiffer par l'extérieur les parties de la face entourant les verres et/ou la zone de liaison centrale, se caractérisent en ce que chaque élément est réalisé indépendamment de la face et conformé de telle sorte que les deux parties et le cas échéant la zone centrale, soient partiellement ou totalement recouverts par lesdits éléments, présentant de l'un à l'autre un coloris et/ou un profil éventuellement distinct, les éléments décoratifs et la partie des lunettes qui s'engage dans ces éléments étant solidarisés au moyen d'un mince revêtement de colle ou analogue, déposé dans le fond de la rainure de ces éléments ou recouvrant la partie des lunettes qui s'engage dans cette rainure.

L'invention permet ainsi, sur une structure de support constituée notamment de deux parties d'encadrement, fermées entièrement ou partiellement sur elles-mêmes et entourant les verres des lunettes, ces parties étant habituellement réunies par un élément de liaison central, d'habiller la face avant, s'il y a lieu les branches latérales, avec des éléments amovibles fabriqués séparément de la face avant et des branches mais qui peuvent être ajoutés sur celles-ci, en venant s'adapter étroitement sur leur profil pour en quelque sorte les doubler, ces éléments convenablement juxtaposés et accolés sur le pourtour des parties des lunettes qu'ils habillent, pouvant présenter des formes extérieures ou des coloris qui varient de l'un à l'autre.

De préférence, chaque élément décoratif comporte une rainure ouverte, susceptible d'épouser étroitement l'extérieur de la section de la partie des lunettes sur laquelle il s'applique, qui s'engage dans la rainure avec un jeu limité de manière à solidariser cet élément et la partie correspondante par emboîtement à la manière d'un clip.

Selon diverses variantes de réalisation, le profil de la rainure d'un élément, adapté à celui de la partie des lunettes qu'il reçoit, présente une section géométrique qui est sensiblement constante sur l'étendue de la rainure ouverte, cette section pouvant être carrée, rectangulaire, triangulaire, circulaire ou autre, sans aucun caractère limitatif, du moment qu'elle permet l'emboîtement à jeu serré de la partie s'engageant dans cette rainure, coiffée par l'élément une fois celui-ci mis en place.

Selon une autre caractéristique, les éléments juxtaposés qui habillent les diverses parties des lunettes, notamment dans sa face frontale, sont solidarisés par collage ou autre moyen de liaison, en s'accolant d'un élément à l'autre selon un plan de joint approprié, délimitant entre ces éléments une frontière distinguant notamment les coloris éventuellement différents de deux éléments successifs.

L'invention permet ainsi, à partir de formes ou de gabarits donnés, déterminant la structure des diverses parties des lunettes, d'habiller celles-ci de toute manière choisie, sans aucune restriction dans l'expression de l'imagination du créateur, ce dernier pouvant, par un moulage ou un usinage des éléments rapportés sur ces parties, donner un aspect d'ensemble prsonnalisé et susceptible de mieux s'adapter au contour du visage et à la physionomie de l'utilisateur.

Notamment, l'adjonction d'éléments rapportés permet d'obtenir des effets qui ne pourraient être acquis en travaillant dans la masse les parties des lunettes sur lesquelles ces éléments sont emboîtés, l'invention permettant en particulier d'éviter toute discontinuité apparente sur les côtés ou la surface de ces parties située notamment vers l'arrière des lunettes.

D'autres caractéristiques de lunettes réalisées conformément à l'invention apparaîtront encore à travers la description qui suit de plusieurs exemples de réalisation, donnés à titre indicatif et non limitatif en référence aux dessins annexés sur lesquels :
- La Figure 1 est une vue en perspective éclatée, permettant d'illustrer la structure des lunettes considérées et le mode de montage des éléments rapportés.
- La Figure 2 est une vue de dessus des lunettes illustrées sur la Figure 1.
- La Figure 3 illustre une variante de réalisation.
- La Figure 4 est une vue en coupe transversale des lunettes selon la Figure 3.
- Les Figures 5 et 6 illustrent en vues partielles deux autres variantes de réalisation.

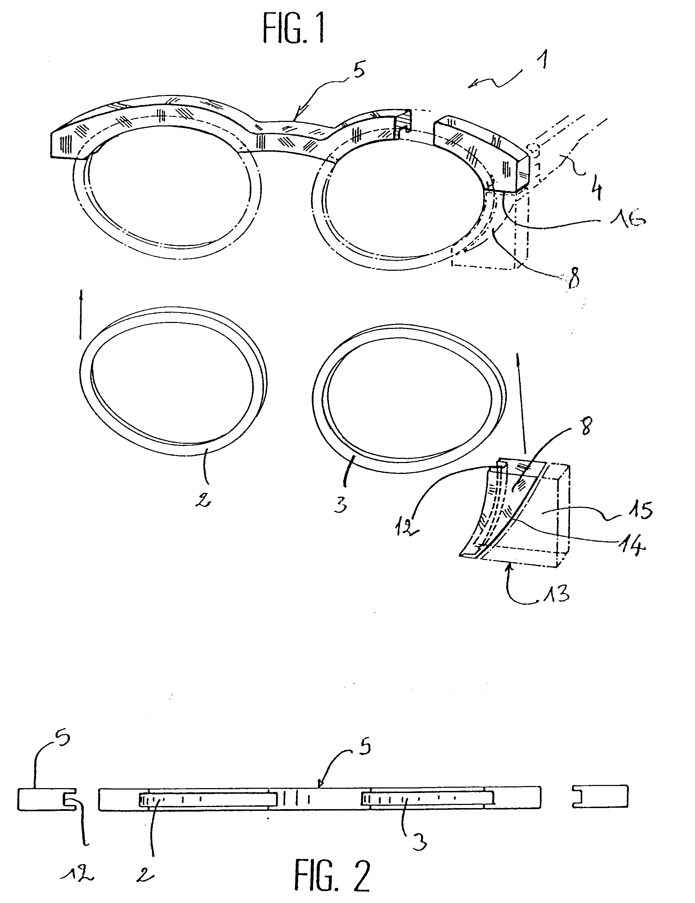

Sur la Figure 1, la référence 1 désigne de façon générale une paire de lunettes comportant, comme usuellement, des parties d'encadrement respectivement 2 et 3 pour les verres à disposer devant les yeux de l'utilisateur, ainsi que des branches latérales de support 4, dont une seule apparaît sur le dessin.

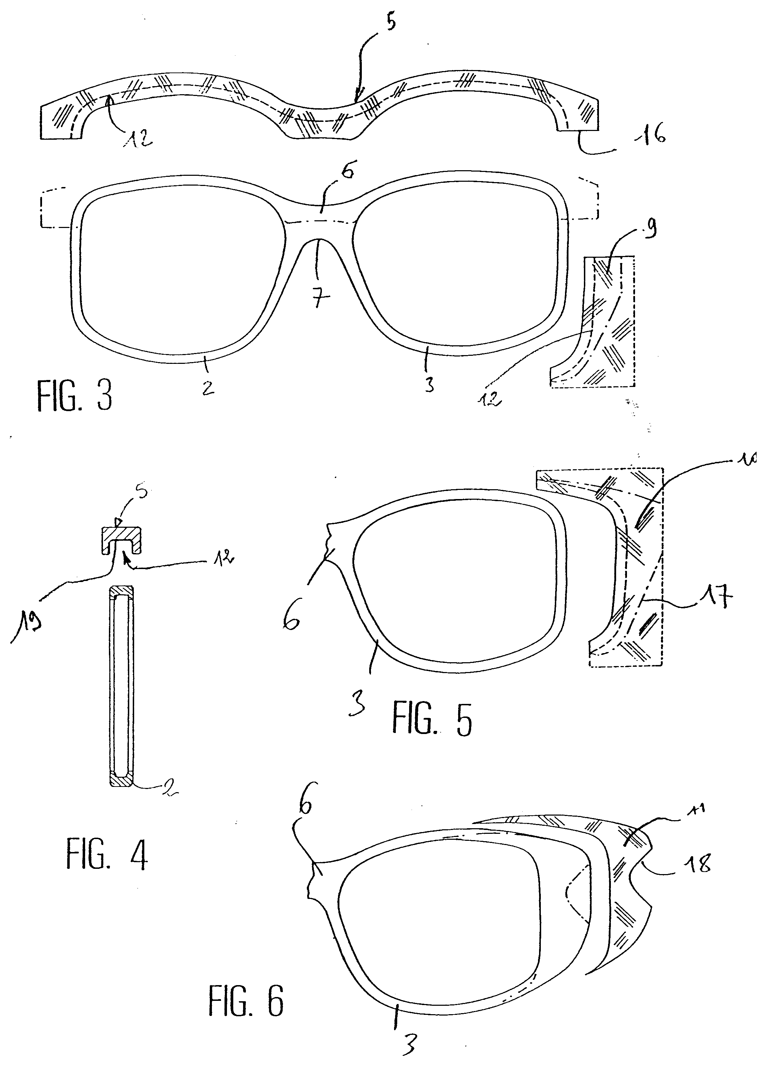

Sur les Figures 1 et 2 les parties d'encadrement 2 et 3 des verres sont séparées, leur liaison avec un écartement approprié étant réalisé par un élément distinct, rapporté conformément à l'invention et dont la réalisation et le montage seront explicités plus loin. Dans la variante selon la Figure 3, les deux parties 2 et 3 sont solidarisées l'une de l'autre par un élément de liaison central 6, destiné à venir chevaucher l'arête du nez de l'utilisateur en venant s'appuyer sur celle-ci par une partie convenablement profilée en creux désignée sur cette Figure sous la référence 7. Les branches latérales 4 peuvent être articulées sur les côtés de l'élement rapporté 5 comme illustré sur la Figure 1, ou bien directement sur les côtés des parties d'encadrement 2 et 3, selon un montage entièrement classique dans la fabrication de ce genre de produit.

Selon l'invention, les parties d'encadrement 2 et 3, la zone de liaison centrale 6 et le cas échéant les branches latérales 4, sont associées à un ou plusieurs éléments rapportés repérés 5 et 8 sur la Figure 1, 5 et 9 sur la Figure 3, 10 sur la Figure 5 et 11 sur la Figure 6, étant souligné ici que le nombre et la forme particulière de chacun de ces éléments peut varier aussi largement que désiré, d'un mode de réalisation à l'autre.

Dans tous les cas, chacun de ces éléments comporte une rainure ouverte 12, ménagée dans l'épaisseur du matériau qui constitue cet élément et dont le profil est adapté de telle sorte qu'il puisse venir coiffer vers l'extérieur le bord de l'une quelconque des parties 2, 3, 4 ou 6 des lunettes, en présentant à cet effet un profil homologue.

Dans les exemples de réalisation illustrés sur les Figures 2 et 4, le profil de ces rainures ouvertes 12 est sensiblement rectangulaire. Bien entendu, tout autre profil mieux adapté selon la nature du matériau avec lequel sont réalisées les diverses parties des lunettes pourrait être adopté, par exemple de forme partiellement circulaire, triangulaire ou autre.

Chaque élément 5, 8, 9, 10 ou 11, peut être obtenu à partir de l'usinage ou du moulage d'un bloc 13 dans lequel est préalablement formé la rainure de montage 12 avant que ne soit délimité le profil extérieur 14 de l'élément, avec élimination d'une partie complémentaire 15 (voir Figure 1).

Les lunettes peuvent être associées (voir Figure 1 notamment et les Figures 3 et 5) à un ou plusieurs éléments rapportés du genre précédent, ceux-ci étant juxtaposés et accolés de l'un à l'autre selon un plan de joint approprié tel que désigné sous la référence 16.

Selon une caractéristique avantageuse de l'invention, chacun des éléments ainsi rapportés peut être réalisé en un matériau approprié, par exemple en une matière plastique incorporant des pigments choisis pour lui donner une coloration déterminée, ce matériau pouvant être semblable ou différent d'un élément à l'autre, selon l'aspect extérieur que l'on souhaite donner aux lunettes ainsi agencées.

Sur les Figures 5 et 6, les éléments 10 et 11 présentent en outre des profils externes, respectivement 17 et 18, obtenus par découpe ou par usinage de manière à donner aux lunettes ainsi habillées, après mise en place de ces éléments, une physionomie particulière qui est bien entendu variable d'un mode de réalisation à l'autre.

On obtient ainsi des lunettes pour lesquelles la structure apparente des pièces qui les constituent, peut être modifiée à volonté, par adjonction d'éléments rapportés décoratifs dont la forme et les coloris peuvent subir toutes les modifications souhaitées et correspondre à toutes les variantes désirées.

De préférence, les éléments rapportés sont fabriqués en une matière plastique appropriée, leurs rainures ouvertes étant aménagées de telle sorte qu'elles s'étendent sur toute la longueur de ces éléments afin en outre de s'adapter sur les parties correspondantes des lunettes avec un jeu minimal, assurant un emboîtement sûr par encliquetage, en principe suffisant pour permettre une liaison permanente de ces éléments. Le cas échéant, on peut prévoir de disposer dans le fond des rainures 12 ou sur les faces externes des parties des lunettes qui s'y engagent, un mince revêtement de colle tel que 19, ce revêtement pouvant aussi bien être appliqué sur ces parties dans leurs régions qui pénètrent à l'intérieur des rainures

Dans ces conditions, il va de soi que l'invention ne se limite pas aux exemples de réalisation plus spécialement décrits ci-dessus, en références aux dessins annexés. Elle en embrasse au contraire toutes les variantes.

## Revendications

**1.-** Lunettes de vision ou de protection solaire, comportant une face frontale formée de deux parties (2, 3) généralement fermées sur elles-mêmes, entourant respectivement les verres des lunettes, ces parties étant réunies par une zone de liaison centrale chevauchant l'arête du nez de l'utilisateur, et deux branches de support (4) des lunettes, articulées sur les côtés latéraux opposés de la face avant, la face avant étant associée à une pluralité d'éléments décoratifs juxtaposés (5, 8, 9, 10, 11), aptes à venir coiffer par l'extérieur les parties de la face entourant les verres et/ou la zone de liaison centrale (6), caractérisées en ce que chaque élément est réalisé indépendamment de la face et conformé de telle sorte que les deux parties et le cas échéant la zone centrale, soient partiellement ou totalement recouverts par lesdits éléments, présentant de l'un à l'autre un coloris et/ou un profil éventuellement distinct, les éléments décoratifs (5, 8, 9, 10, 11) et la partie (2, 3, 4) des lunettes qui s'engage dans ces éléments étant solidarisés au moyen d'un mince revêtement (19) de colle ou analogue, déposé dans le fond de la rainure (12) de ces éléments ou recouvrant la partie des lunettes qui s'engage dans cette rainure.

**2.-** Lunettes selon la revendication 1, caractérisées en ce que chaque élément décoratif (5, 8, 9, 10, 11) comporte une rainure ouverte (12), susceptible d'épouser étroitement l'extérieur de la section de la partie (2, 3, 4) des lunettes sur laquelle il s'applique, qui s'engage dans la rainure avec un jeu limité de manière à solidariser cet élément et la partie correspondante par emboîtement à la manière d'un clip.

**3.-** Lunettes selon l'une des revendications 1 ou 2, caractérisées en ce que le profil de la rainure d'un élément, adapté à celui de la partie des lunettes qu'il reçoit, présente une section géométrique qui est sensiblement constante sur l'étendue de la rainure ouverte, cette section étant carrée, rectangulaire, triangulaire, circulaire ou autre.

**4.-** Lunettes selon l'une quelconque des revendications 1 à 3, caractérisées en ce que les éléments juxtaposés (5, 8, 9, 10, 11) qui habillent les diverses parties (2, 3, 4) des lunettes, notamment dans sa face frontale, sont solidarisés par collage ou autre moyen de liaison, en s'accolant d'un élément à l'autre selon un plan de joint (16) approprié, délimitant entre ces éléments une frontière distinguant les coloris éventuellement différents de deux éléments successifs.
